(19) Europäisches Patentamt

European Patent Office

Office européen des brevets

(11) **EP 2 414 883 B1**

## (12) EUROPEAN PATENT SPECIFICATION

(45) Date of publication and mention
of the grant of the patent:
**16.10.2019  Bulletin 2019/42**

(21) Application number: **10758443.5**

(22) Date of filing: **15.03.2010**

(51) Int Cl.:
***G02B 13/06*** *(2006.01)*     ***G02B 13/00*** *(2006.01)*
*G02B 9/62* *(2006.01)*

(86) International application number:
**PCT/JP2010/054742**

(87) International publication number:
**WO 2010/113669 (07.10.2010 Gazette 2010/40)**

### (54) WIDE ANGLE LENS AND IMAGING DEVICE

WEITWINKELLINSE UND BILDGEBUNGSVORRICHTUNG DAMIT

LENTILLE GRAND ANGLE ET DISPOSITIF D'IMAGERIE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority:  **03.04.2009   JP 2009091103**

(43) Date of publication of application:
**08.02.2012   Bulletin 2012/06**

(73) Proprietor: **Ricoh Company, Ltd.
Tokyo 143-8555 (JP)**

(72) Inventors:
• **YOSHIDA, Hayato**
**Iwata 025-0394 (JP)**
• **MONIWA, Naoki**
**Iwata 025-0394 (JP)**
• **ABE, Issei**
**Tokyo 143-8555 (JP)**

(74) Representative: **SSM Sandmair
Patentanwälte Rechtsanwalt
Partnerschaft mbB
Joseph-Wild-Straße 20
81829 München (DE)**

(56) References cited:
**JP-A- 2006 251 437     JP-A- 2006 284 620
JP-A- 2007 249 073     JP-A- 2007 279 632
JP-A- 2007 279 632     JP-A- 2008 134 494
US-A1- 2009 073 577**

• **Warren J. Smith: "Modern Lens Design" In:
"Modern Lens Design", 1 January 1992
(1992-01-01), McGraw-Hill, Inc, XP055152035,
ISBN: 978-0-07-059178-3 pages 25-27, * chapter
3.1 ***

**Description**

Technical Field

The present invention relates to a wide angle lens and an imaging device.

Background Art

Monitor cameras and in-vehicle cameras, which are formed by combining imaging lenses and area sensors, are being put into practical use.

An imaging lens used in monitor cameras or in-vehicle cameras preferably has a wide imaging range. Therefore, the imaging lens needs to have a wide field angle. Furthermore, monitor cameras and in-vehicle cameras are often used outdoors. Thus, the brightness of the environment changes significantly in daytime and nighttime. In order to successfully perform imaging at nighttime, the imaging lens needs to have high brightness.

Furthermore, there is demand for compact monitor cameras and compact in-vehicle cameras. Therefore, it is important that the size of the lens is small.

Conventionally, there are lenses that have a field angle of more than 180 degrees and an F-number of 2.8 in terms brightness (see, Patent Document 1: Japanese Laid-Open Patent Application No. 2007-249073 and Patent Document 2: Japanese Laid-Open Patent Application No. 2006-284620). The wide angle lenses disclosed in patent documents 1 and 2 have a total optical length of approximately 11 mm, which fulfills the need for a small-sized lens.

Furthermore, an imaging element (area sensor) converts an image of a target, formed by the wide angle lens, into electronic data including pixels. Therefore, there is a proposal for correcting part of the lens aberration (for example, the distortion aberration) with an electronic means (see Patent Document 3: Japanese Laid-Open Patent Application No. 2008-276185). The wide angle lens described in patent document 3 also has an F-number of 2.8.

JP 2007 279632 A discloses a super wide angle lens which is constituted of a small number of lenses, is bright and can secure a maximum viewing angle being equal to or greater than 170 degrees. The super wide angle lens is equipped with a first lens which is a negative meniscus having a convex surface formed on its object side, a second negative lens, a third positive lens, a diaphragm, a fourth positive lens and a fifth negative lens which are separated from each other or cemented with each other, and a sixth biconvex lens in order from the object side to an image side. An aspherical surface is formed at least on one surface of the third lens or the sixth lens. The super wide angle lens satisfies following conditions. (1) $0.4 < |f_{12}|/H < 1.1$, (2) $1.4 < |f_1|/|f_2| < 2.3$, and (3) $0.2 < d_4/H < 0.7$, wherein f denotes focal distance of the lens entire system, $|f_{12}|$ denotes synthetic focal distance of the first lens and the second lens, $|f_1|$ denotes focal distance of the first lens, $|f_2|$ denotes focal distance of the second lens, $|d_4|$ denotes distance between the centers of the image side surface of the second lens and the object side surface of the third lens, and H denotes maximum image height.

US 2009/073577 A1 discloses a super wide angle optical system including: a first lens group including one or more of irrotational symmetric lens surfaces disposed sequentially from an object side and having, overall, a negative refractive power; an aperture stop for intercepting unnecessary light; and a second lens group including one or more of irrotational symmetric lens surfaces and having, overall, a positive refractive power.

Accordingly, there is a need for a wide angle lens having a field angle exceeding 180 degrees, a brightness brighter than F=2.8, and a compact size, and an imaging device including such a wide angle lens.

Disclosure of Invention

Aspects of the present invention provide a wide angle lens and an imaging device that solve or reduce one or more problems caused by the limitations and disadvantages of the related art.

A wide angle lens according to the present invention is defined in appended claim 1.

An aspect of the present invention provides a wide angle lens whose field angle exceeds 180 degrees, including a front group, a diaphragm, and a rear group, which are arranged in the stated order from an object side toward an image side, wherein the front group includes a first lens that is a negative meniscus lens whose convex surface is facing the object side, a second lens that is a negative lens, and a third lens that is a positive lens, which are arranged in the stated order from the object side toward the image side, the rear group includes a fourth lens that is a positive lens, a fifth lens that is a negative lens, and a sixth lens that is a positive lens, which are arranged in the stated order from a diaphragm side toward the image side, the first to sixth lenses form an imaging system including a total of six separate lenses, the third lens in the front group is made of a material having an Abbe number of vdL3 that satisfies a condition of vdL3<21, and the fifth lens in the rear group is made of a material having an Abbe number of vdL5 that satisfies a condition of vdL5<21, wherein the second lens (L2) is a negative meniscus lens whose convex surface is facing the object, the third lens (L3) is a double-convex lens, the fourth lens (L4) is a double-convex lens, in which the surface having a large curvature is facing the image, the fifth lens (L5) is a double-concave lens, the sixth lens (L6) is a double-convex lens, both surfaces of the second lens (L2), both surfaces of the fourth lens (L4), and both surfaces of the sixth lens (L6) are aspheric lenses, and the first lens (L1) is a glass lens; and the second lens (L2), the fourth lens (L4), and the sixth lens (L6) are resin lenses.

Brief Description of Drawings

FIG. 1 illustrates a wide angle lens according to an embodiment of the present invention and an on-axis light beam and an off-axis light beam;
FIG. 2 indicates data of a wide angle lens according to practical example 1;
FIG. 3 indicates aspheric surface data of the wide angle lens according to practical example 1;
FIG. 4 illustrates horizontal aberrations of the wide angle lens according to practical example 1 in a tangential direction and a sagittal direction;
FIG. 5 is an astigmatism diagram of practical example 1;
FIG. 6 illustrates distortion aberrations of practical example 1;
FIG. 7 illustrates relative chromatic aberrations of magnification of practical example 1;
FIG. 8 illustrates relative chromatic aberrations (in pixel units) of magnification of practical example 1;
FIG. 9 illustrates relative chromatic aberrations (in pixel units) of magnification of practical example 1;
FIG. 10 illustrates the parts relevant to an imaging element and an electronic processing unit of an imaging device;
FIG. 11 illustrates a block circuit indicating a detailed configuration of the imaging device; and
FIG. 12 illustrates a detailed configuration of a signal processing unit.

Best Mode for Carrying out the Invention

Embodiments of the present invention are described below with reference to the accompanying drawings.

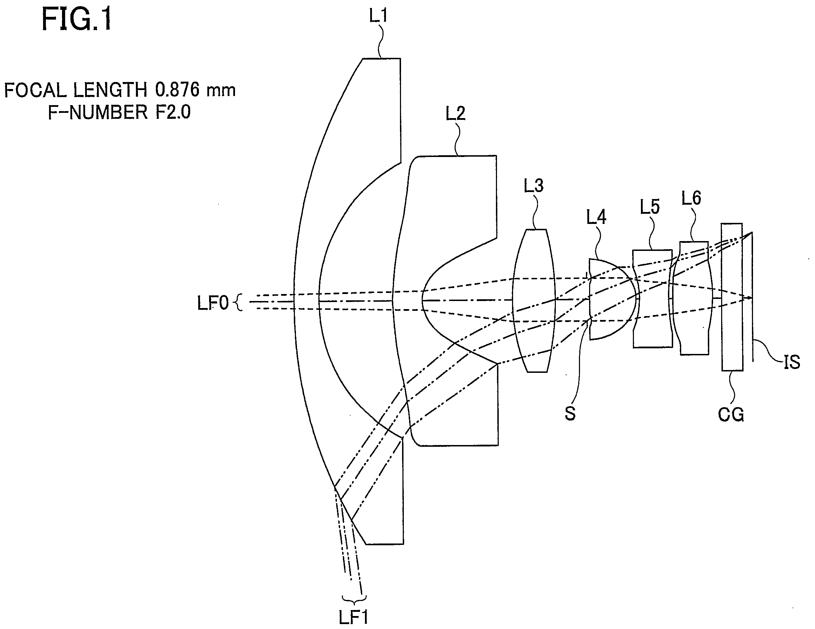

FIG. 1 illustrates a wide angle lens according to an embodiment of the present invention. The wide angle lens corresponds to practical example 1 described below.
The wide angle lens has six separate lenses including a first lens L1 to a sixth lens L6, which are arranged from the left side (the side closer to an object, i.e., the object side) toward the right side (the side closer to the image, i.e., the image side) as viewed in FIG. 1.
The first lens L1 is a negative meniscus lens whose convex surface is facing the object (object-side surface). The second lens L2 is also a negative meniscus lens whose convex surface is facing the object. The third lens L3 is a double-convex lens. The first lens L1, the second lens L2, and the third lens L3 form a front group. The power distribution in the front group is "negative/negative/positive".
The fourth lens L4 is a double-convex lens, in which the surface having a large curvature is facing the image (image-side surface). The fifth lens L5 is a double-concave lens. The sixth lens L6 is a double-convex lens. The fourth lens L4, the fifth lens L5, and the sixth lens L6 form the rear group. The power distribution in the rear group is "positive/negative/positive".
A diaphragm is disposed at a position between the front group and the rear group, i.e., at a position close to the object-side surface of the fourth lens L4.
In FIG. 1, CG denotes a cover glass of an imaging element (CCD area sensor) and IS denotes the imaging plane. The imaging plane IS corresponds to the acceptance surface of the imaging element. The imaging element has pixels that are arranged two-dimensionally, and converts an image of a target, which has been formed by the wide angle lens, into electronic image data.
LF0 denotes an on-axis light beam (light beam along the axis) and LF1 denotes a most off-axis light beam. The angle at which the most off-axis light beam LF1 is entering the first lens L1 shows that this wide angle lens has a field angle exceeding 180 degrees.
The second lens L2, the fourth lens L4, and the sixth lens L6 are aspheric lenses made of resin, and the first lens L1 is a glass lens.

<Practical example 1>

A description is given of a practical example of the wide angle lens shown in FIG. 1. Any of the lengths mentioned below are in units of mm.
The lens of practical example 1 has a field angle of 190 degrees (half field angle of 95 degrees) and a focal length of 0.876.

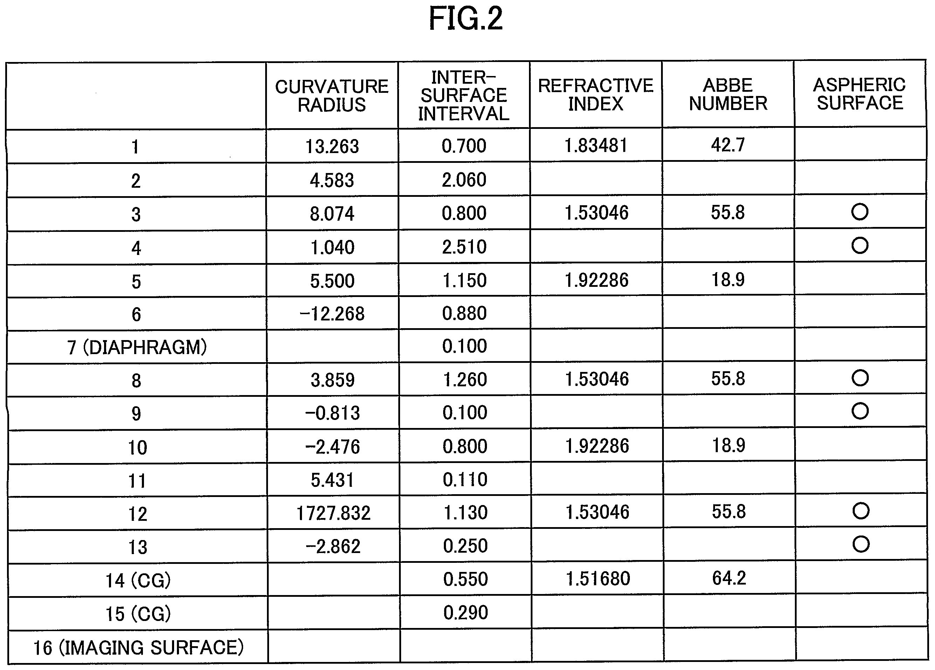

FIG. 2 indicates data of specifications of practical example 1.

The leftmost column in the table of FIG. 2 indicates surface numbers, starting from the surface of the first lens L1 facing the object to the imaging surface IS. Surfaces having surface numbers include the surfaces of the lenses, the surfaces of the diaphragm S, both surfaces of the cover glass CG, and the imaging surface.

In relation with FIG. 1, surface numbers 1 through 6 correspond to the object-side/image-side surfaces of the first lens L1 through the third lens L3. Surface number 7 corresponds to the surface of the diaphragm S. Surface numbers 8 through 13 correspond to the object-side/image-side surfaces of the fourth lens L4 through the sixth lens L6. Surface number 14 and 15 correspond to the object-side/image-side surfaces of the cover glass CG. Surface number 16 corresponds to the surface of the imaging surface IS.

The circles in the aspheric surface column indicate that the corresponding lens surface is aspheric. As shown in FIG. 2, both surfaces of the second lens L2 (surface numbers 3 and 4), both surfaces of the fourth lens L4 (surface numbers 8 and 9), both surfaces of the sixth lens (surface numbers 12 and 13) are aspheric. The values in the curvature radius column for aspheric surfaces correspond to the paraxial curvature radius.

The shape of an aspheric surface is expressed by a known formula indicated below, where a coordinate in a direction orthogonal to the optical axis is h, the coordinate in the optical axial direction is Z, the paraxial curvature radius is R, the conical constant is K, and the high order aspheric surface coefficients are A, B, C, D, E, F. The shape is specified by applying values of K and A through F.

$$Z=(h^2/R)/[1+\{1-(1+K)(h^2/R^2)\}^{1/2}]$$

$$+Ah^2+Bh^4+Ch^6+Dh^8+Eh^{10}+Fh^{12}$$

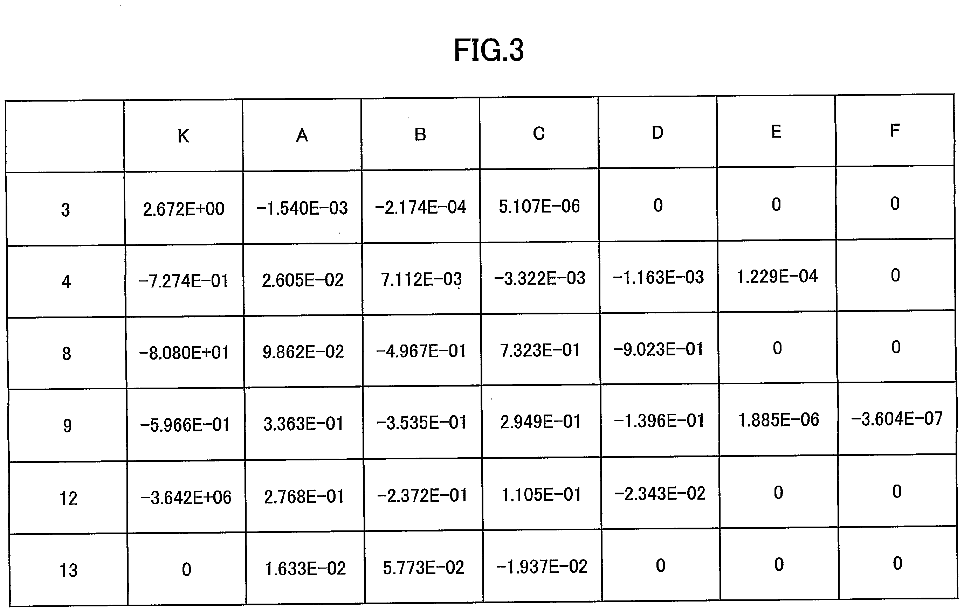

FIG. 3 indicates aspheric surface data of practical example 1. The leftmost column in the table of FIG. 3 indicates surface numbers.

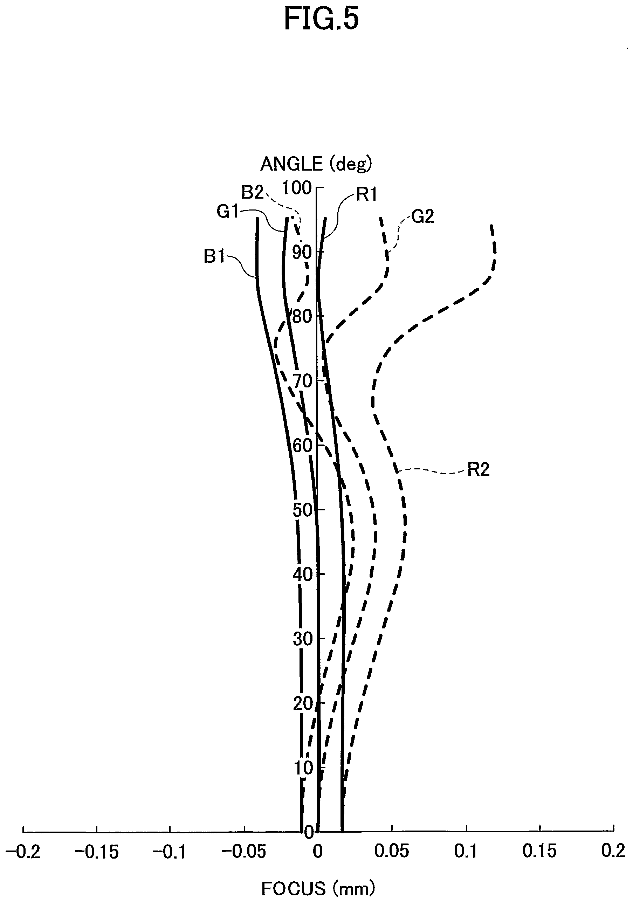

In FIG. 3, 5.107E-06 means $5.176 \times 10^{-6}$, for example.

That is to say, the wide angle lens of practical example 1 includes the front group, the diaphragm S, and the rear group, arranged in the stated order from the object side toward the image side. The front group includes the first lens L1 that is a negative meniscus lens whose convex surface is facing the object, the second lens L2 that is a negative lens, and the third lens L3 that is a positive lens, arranged in the stated order from the object side toward the image side. The rear group includes the fourth lens L4 that is a positive lens, a fifth lens L5 that is a negative lens, and a sixth lens L6 that is a positive lens, arranged in the stated order from the diaphragm S (diaphragm side) toward the image side. A total of six separate lenses form the imaging system.

The material of the third lens L3 in the front group has an Abbe number of vdL3 (=18.9) and the material of the fifth lens L5 in the rear group has an Abbe number of vdL5 (=18.9), which satisfy the following conditions (1) and (2), respectively.

$$(1) \quad \nu dL3 < 21$$

$$(2) \quad \nu dL5 < 21$$

Furthermore, the F-number of the wide angle lens according to practical example 1 is 2.0.

The second lens L2, the fourth lens L4, and the sixth lens L6 are aspheric lenses (both sides are aspheric) made of resin. The first lens L1, the third lens L3, and the fifth lens L5 are glass lenses.

The back focus (the length along the optical axis from the image-side surface of the sixth lens L6 to the imaging surface) is 1.09 mm. The total optical length, which is the length along the optical axis from the object-side surface of the first lens L1 to the imaging surface, is 12.69 mm. The effective diameter of the first lens L1, which defines the size of the wide angle lens in the direction orthogonal to the optical axis, is less than or equal to 13 mm. As described above, the wide angle lens according to the practical example has a compact size that is less than or equal to that of the wide angle lens described in patent document 1, etc.

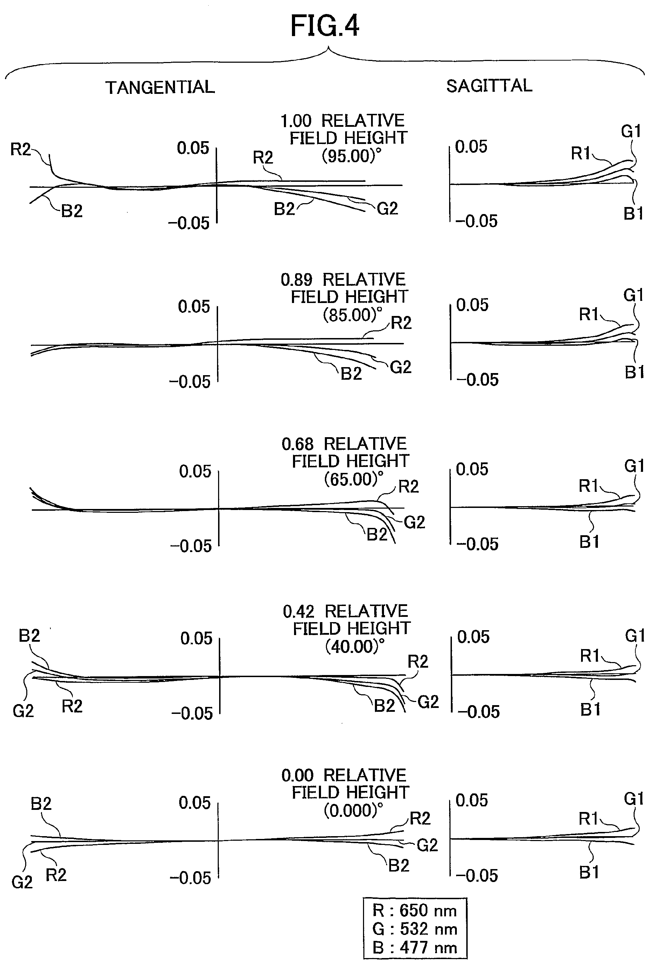

FIG. 4 illustrates horizontal aberrations of practical example 1, including coma aberrations in a tangential direction and a sagittal direction. Furthermore, FIG. 5 is an astigmatism diagram of practical example 1. In FIGS. 4 and 5, R1 and R2 correspond to light beams having a wavelength of 650 nm, G1 and G2 correspond to light beams having a wavelength of 532 nm, and B1 and B2 correspond to light beams having a wavelength of 477 nm. R1, G1, and B1 indicate the sagittal direction, and R2, G2, and B2 indicate the tangential direction.

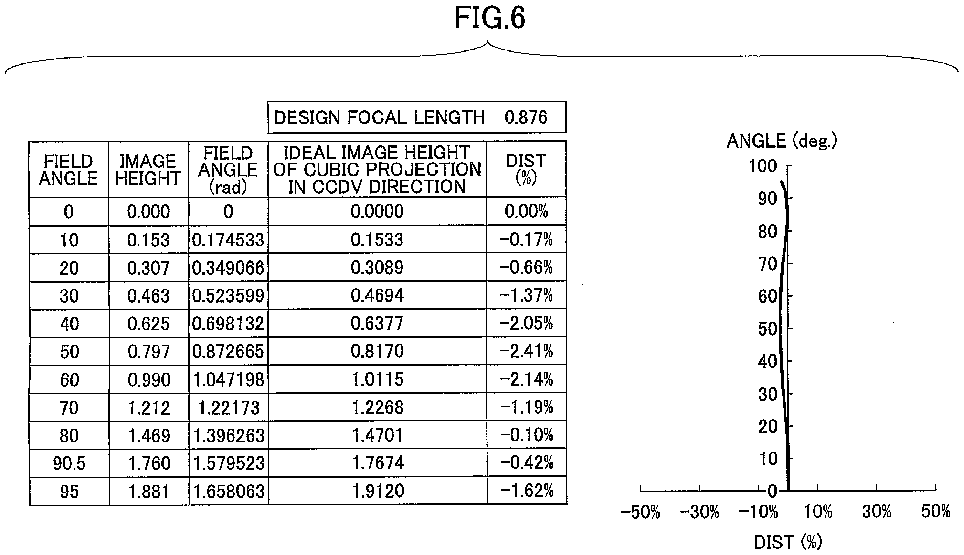

FIG. 6 illustrates distortion aberrations with respect to various field angles. The table on the left in FIG. 6 indicates calculated values, and the diagram on the right is a distortion aberration diagram. In the distortion aberration diagram, the vertical axis indicates a half field angle (incidence angle of an incident light beam with respect to an optical axis), and the horizontal axis indicates the distortion amount (%). The distortion aberration is indicated in a perpendicular direction in the imaging element by a cubic projection method. Specifically, the distortion aberration is expressed by the following formula

$$Y=2f\cdot\tan(\theta/2)$$

where the focal length is f, the image height is Y, and the half field angle is $\theta$.

As shown in the distortion aberration diagram on the right side in FIG. 6, the distortion aberration is successfully corrected. Thus, there is almost no need to make corrections on the electronic data output by the image element by an electronic process.

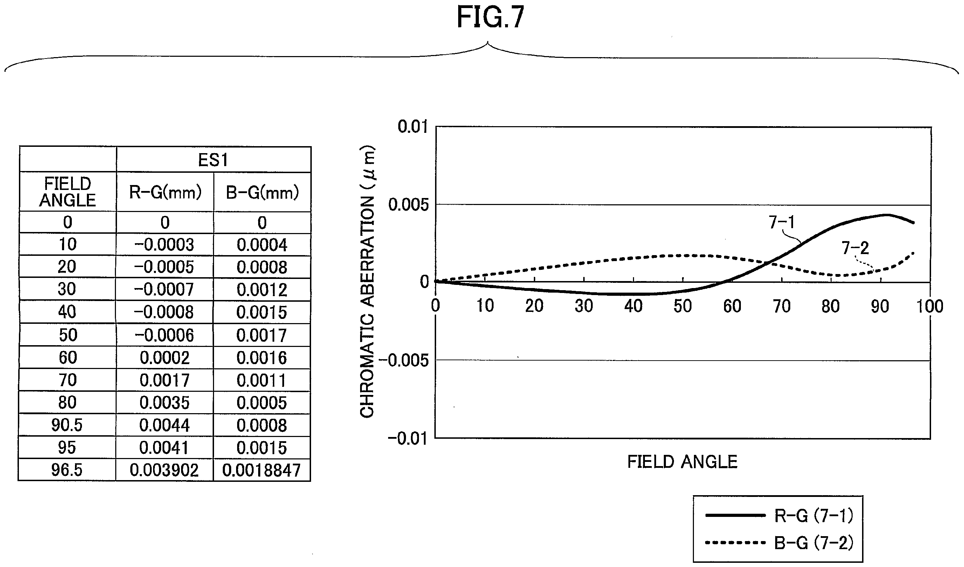

FIG. 7 illustrates relative differences in chromatic aberration of magnification by, using, as a reference, a relative chromatic aberration of magnification, i.e., a green light (wavelength: 532 nm). Specifically, differences in chromatic aberration of magnification (R-G) between a red light (wavelength: 650 nm) and the green light, and differences in chromatic aberration of magnification (B-G) between a blue light (wavelength: 477 nm) and the green light, are shown. The table on the left side in FIG. 7 indicates calculated values and the diagram on the right side of FIG. 7 is a graph, where the horizontal axis represents the field angle and the vertical axis indicates the chromatic aberration of magnification. In the graph on the right in FIG. 7, a curve 7-1 indicates R-G and a curve 7-2 indicates B-G.

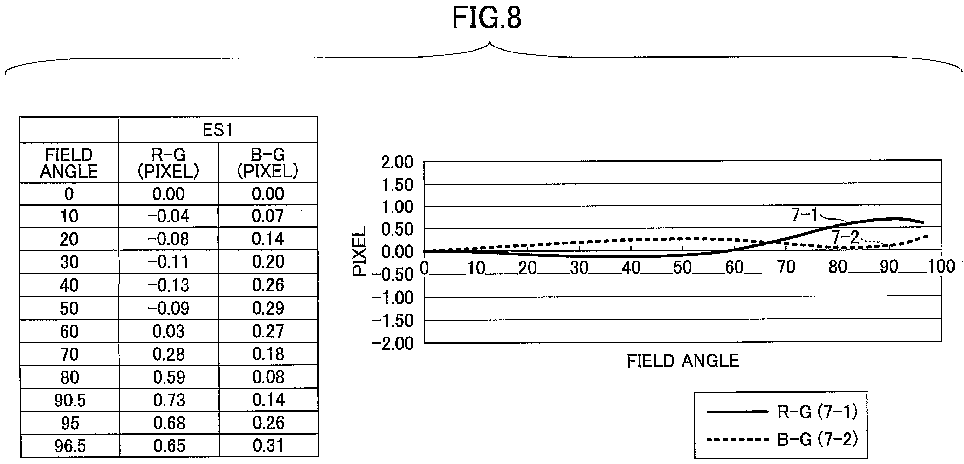

FIG. 8 indicates the differences in chromatic aberration of magnification R-G and B-G indicated in FIG. 7, in terms of the relationship between the number of pixels and the chromatic aberration of magnification. The table on the left side of FIG. 8 indicates calculated values and the diagram on the right side of FIG. 8 is a graph, where the horizontal axis represents the field angle and the vertical axis indicates the number of pixels. In the graph on the right in FIG. 8, a curve 7-1 indicates R-G and a curve 7-2 indicates B-G.

Assuming that the difference in the chromatic aberration of magnification R-G at a certain field angle corresponds to one pixel, it means that the imaging positions of the red light R and the green light G are displaced with respect to each other by one pixel at this certain field angle.

In the example of FIG. 8, the pixel pitch is 0.006 mm (6 $\mu$m).

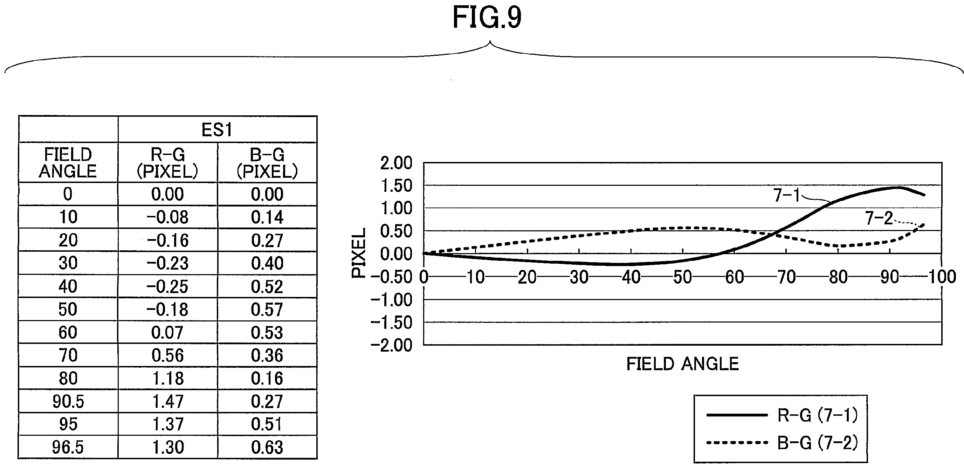

FIG. 9 illustrates the same differences in chromatic aberration of magnification R-G and B-G as those of FIG. 8, in terms of the relationship between the number of pixels and the chromatic aberration of magnification. The table on the left side of FIG. 9 indicates calculated values and the diagram on the right side of FIG. 9 is a graph, where the horizontal axis represents the field angle and the vertical axis indicates the number of pixels. In the graph on the right in FIG. 9, a curve 7-1 indicates R-G and a curve 7-2 indicates B-G.

The wide angle lens described above may be combined with an image element to form an imaging device.

As described above, the imaging element is an area sensor type element such as a CCD or a CMOS. Specifically, the imaging element includes pixels arranged two-dimensionally. The imaging element converts, into image data, the image of an object, which is formed on the surface including pixels (i.e., the above-described imaging surface) by the wide angle lens.

In one example of an imaging element combined with the wide angle lens, the shape of the acceptance surface may be rectangular (H indicates the lengthwise direction and V indicates the widthwise direction). The pixel pitch is 6 $\mu$m in both the H and V direction, and the number of pixels is 640 (H direction) $\times$ 480 (V direction).

In this example, the effective imaging area is 2.88 mm (V direction) $\times$ 3.84 mm (H direction) $\times$ 4.80 mm (D direction: diagonal direction).

In addition to the wide angle length and the imaging element, an electronic processing unit may also be included in the imaging device.

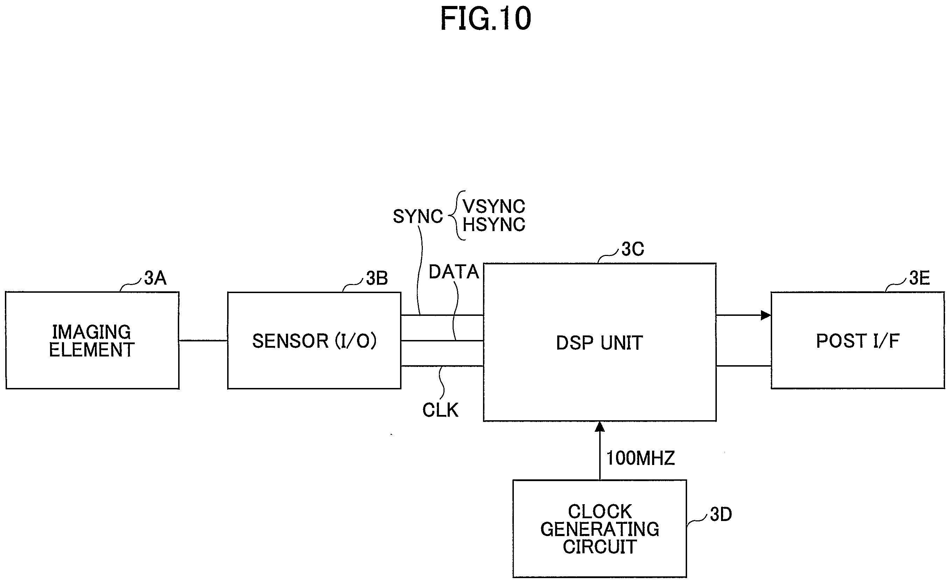

FIG. 10 illustrates the parts relevant to the imaging element and the electronic processing unit of the imaging device.

The electronic processing unit is at a subsequent stage of the imaging element denoted by 3A. The electronic processing unit includes a memory for storing image data output from the imaging element 3A, a memory output control circuit for outputting image data corresponding to a specified field angle, a first signal processing circuit for correcting the distortion aberration of the wide angle lens, and a second signal processing circuit for correcting the MTF of the wide angle lens.

Specifically, as shown in a typical block circuit of FIG. 10, the photoelectric conversion signals of the imaging element 3A are output from a sensor (I/O) 3B. The sensor (I/O) 3B outputs, for example, SYNC (V-SYNC, HSYNC) signals, DATA signals, and CLK (clock) signals.

For example, there are 10 bits of data signals for each of R, G, and B, and CLK signals are 25 MH.

These signals are input to a signal processing unit (DSP unit) 3C, where they are processed. The DSP unit 3C includes the above-mentioned memory, the memory output control circuit, the first signal processing circuit, and the second signal processing circuit.

The hardware configuration may include any element as long as the process described below can be performed on the programmable logic of FPGA and DSP and input signals such as ASIC. A clock generating circuit 3D inputs clock signals of, for example, 100 MH, into the DSP unit 3C.

Output from the DSP unit 3C is converted by a post I/F 3E, so as to be output in a required format of the system. The output format may be, for example, YUV422, YUV444, and YUV221 in the case of digital signals. In this example, it is assumed that the signals are converted into NTSC signals

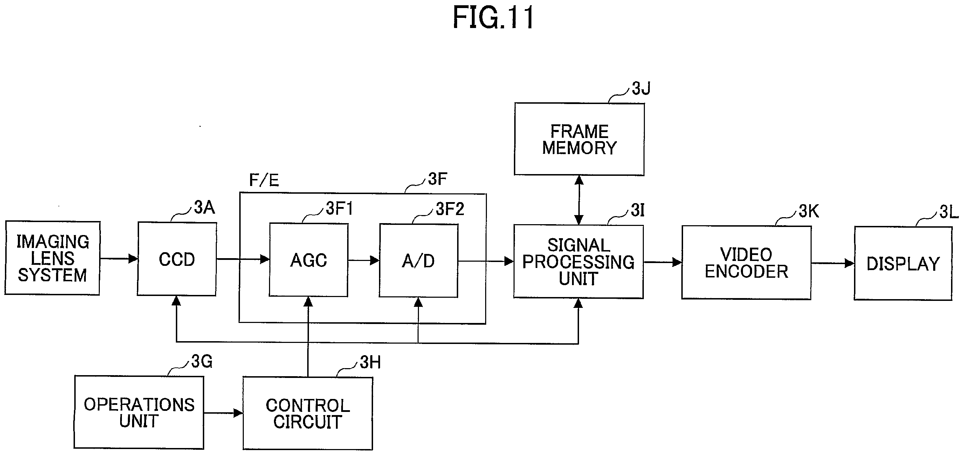

FIG. 11 illustrates a block circuit indicating a detailed configuration of the imaging device.

With the use of the imaging lens system (above-described wide angle lens shown in FIG. 1), an image of an object (object image) is formed on an image surface (above-described imaging surface IS) of the CCD corresponding to the imaging element 3A. The imaging element 3A performs photoelectric conversion on the object image to convert it into electronic image data. The object image formed by the wide angle lens has a distortion aberration as indicated in FIG. 6.

A preprocessing unit 3F includes an automatic gain controller 3F1 and an A/D converter 3F2. The automatic gain controller 3F1 performs automatic gain control on the image data output from the imaging element 3A. The A/D converter 3F2 converts the image data into digital signals, so that digital image data is generated. The automatic gain controller 3F1 is adjusted by a control circuit 3H that is controlled according to operations input to an operations unit 3G.

A signal processing unit 3I performs image processing on the digital image data. The image processing includes a process for improving image deterioration caused by the imaging element 3A and a process for improving image deterioration caused by the wide angle lens.

For example, the pixels of the imaging element 3A are arranged in a Bayer arrangement, in which the number of green (G) pixels is larger than the number of red (R) pixels or the number of blue (B) pixels. When creating each of the color images of R, G, and B, if the image data sets of R, G, and B are merely extracted and combined together, the color images will be displaced with respect to each other due to the displaced pixel arrangements.

First, the signal processing unit 3I performs a process of rearranging the pixels and a process of correcting the white balance among R, G, and B. Accordingly, the process for correcting image deterioration caused by the imaging element 3A is performed. Subsequently, the signal processing unit 3I performs a process of correcting factors that cause image deterioration, which arise from the imaging lens system, such as distortion aberration and MTF deterioration.

When performing these correction processes, the image data sets of R, G, and B are temporarily stored in a frame memory (memory) 3J. The control circuit 3H also functions as the memory output control circuit for outputting image data corresponding to a specified field angle from the memory. The image data read out from the frame memory 3J is processed by the signal processing unit 3I according to need. The digital image data is then output from the signal processing unit 3I, input to a video encoder 3K, and then to a display 3L.

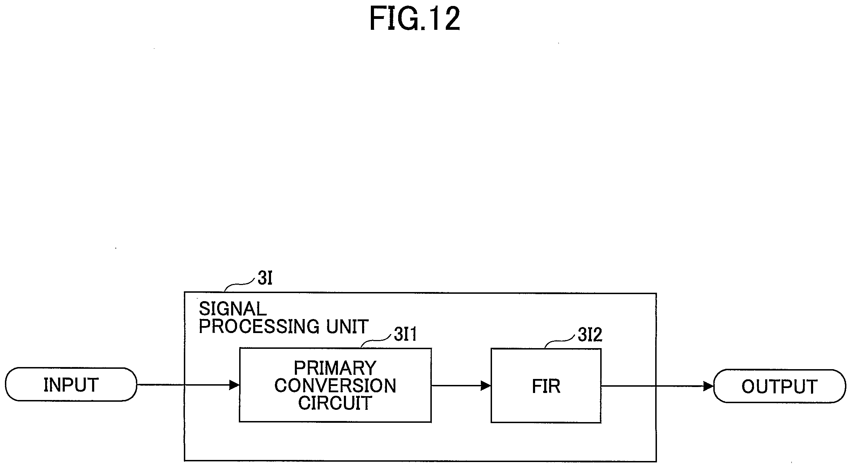

FIG. 12 illustrates a detailed configuration of the signal processing unit 3I. The detailed configuration shows only the first signal processing circuit and the second signal processing circuit.

The first signal processing circuit is constituted by a primary conversion circuit 3I1. The second signal processing circuit is constituted by an FIR filter circuit 3I2.

The primary conversion circuit 3I1 receives digital image data sets of R, G, and B that have undergone the process of correcting image deterioration caused by the hardware configuration of imaging element 3A. The primary conversion circuit 3I1 performs a primary conversion process on these digital image data sets of R, G, and B. The primary conversion process is a coordinate conversion process for converting coordinates of the input image data into coordinates of the output image data by performing mapping, in consideration of the distortion of the object image caused by distortion aberration. Accordingly, a process of correcting distortion aberration is executed.

The distortion aberration is specified as one of the properties of the wide angle lens at the stage of designing the device. Therefore, the distortion aberration may already be known, or may be obtained by actually measuring the lens. Based on the distortion aberration property, it is possible to determine a coordinate conversion formula used for converting the coordinates of the input image data into coordinates of the output image data. By making corrections according to this formula, the distortion aberration can be eliminated, i.e., distortions in the image data can be corrected. For example, the conversion formula may be approximated by using a polynomial equation.

In some cases, the light volume distribution may change due to compression/decompression of pixels according to the formula, and shading may appear. Thus, inconsistencies in the light volume are corrected by multiplying the brightness of each pixel by a coefficient corresponding to the enlargement factor of the area of each pixel.

The digital image data whose distortion aberration has been corrected as described above is then input into the FIR filter circuit 3I2 in the next stage. The FIR filter circuit 3I2 performs a process such as deconvolution on the digital image data that is output from the primary conversion circuit 3I1.

Accordingly, deterioration of the MTF is corrected. A Weiner filter or a simple HPF (high path filter) may be used as the FIR filter.

The distortion aberration of the wide angle lens of practical example 1 is successfully corrected as shown in FIG. 6. Therefore, an image with good properties can be formed by correcting the distortion aberration as described above. However, in practical situations, when the wide angle lens itself has already been properly corrected, the process of correcting the distortion aberration may be omitted.

A wide angle lens according to an embodiment of the present invention has a field angle exceeding 180 degrees, and has the following features.

A front group, a diaphragm, and a rear group are arranged in the stated order from an object side toward an image side.

The front group includes a first lens that is a negative meniscus lens whose convex surface is facing the object side, a second lens that is a negative lens, and a third lens that is a positive lens, which are arranged in the stated order from the object side toward the image side.

The rear group includes a fourth lens that is a positive lens, a fifth lens that is a negative lens, and a sixth lens that is a positive lens, which are arranged in the stated order from a diaphragm side toward the image side.

An imaging system including a total of six separate lenses is formed by the first to sixth lenses.

The third lens in the front group is made of a material having an Abbe number of vdL3 and the fifth lens in the rear group is made of a material having an Abbe number of vdL5, whereby the Abbe numbers satisfy the following conditions (1) and (2), respectively.

$$(1) \quad vdL3 < 21$$

$$(2) \quad vdL5 < 21$$

The wide angle lens may have an F-number of 2.0 or an F-number in the neighborhood of 2.0 (for example, 1.9 through 2.4).

The second lens, the fourth lens, and the sixth lens may be aspheric lenses.

The first lens may be a glass lens and the second lens, the fourth lens, and the sixth lens may be resin lenses.

An imaging device according to an embodiment of the present invention includes a wide angle lens and an imaging element.

The wide angle lens included in the imaging device may be any of the above described wide angle lenses according to an embodiment of the present invention.

The imaging element included in the imaging device includes pixels that are arranged two-dimensionally. The imaging element is configured to perform a conversion process to convert an image of an imaging target formed by the wide angle lens into image data. An area sensor such as a CCD or a CMOS may be used as the imaging element.

The imaging device may further include an electronic processing unit configured to execute an electronic process on the image data obtained by the conversion process performed by the imaging element.

The electronic process performed on the image data, which is obtained as a result of the conversion process of the imaging element, may be any widely-known imaging process or transmission process, such as the process for correcting aberration and MTF as described in patent document 3.

As described above, the wide angle lens according to an embodiment of the present invention has a field angle exceeding 180 degrees and attains a brightness brighter than the brightness (F=2.8) of the conventional technology.

The F-number, which is an index of brightness, is the focal length divided by the incident aperture diameter. To reduce the F-number for the purpose of increasing the brightness, the focal length is to be reduced and the incident aperture diameter is to be increased. However, in either case, the angle between the on-axis light beam and the off-axis light beam increases, which may increase the chromatic aberration (particularly, chromatic aberration of magnification). Consequently, the quality of the image formed by the imaging device may deteriorate.

In the wide angle lens according to an embodiment of the present invention, the front group including the first to third lenses has a power distribution of negative/negative/positive, while the rear group including the fourth to sixth lenses has a power distribution of positive/negative/positive. A diaphragm is disposed between the front group and the rear group. In the above-described lens configuration, the third and fifth lenses have Abbe numbers vdL3 and vdL5 that satisfy the above conditions (1) and (2), respectively. Such highly-dispersive lenses are capable of effectively reducing chromatic aberrations that are incurred as a result of reducing the F-number, thereby forming high-quality images.

Specifically, in the front group, the third lens having high dispersion and positive power is primarily used to generate significant chromatic aberration of magnification, for the purpose of facilitating the correction process. Then, in the rear group, the fifth lens having high dispersion and negative power is used to properly correct the significant amount of chromatic aberration of magnification.

If conditions (1) and (2) were not satisfied, the dispersion of the third and fifth lenses would be insufficient.

Consequently, it would be difficult to properly correct the chromatic aberration when the F-number is reduced.

It goes without saying that aberrations other than chromatic aberration also need to be corrected to improve image quality. The wide angle lens according to an embodiment of the present invention includes six separate lenses. Therefore, the wide angle lens has multiple design parameters. Accordingly, a higher degree of freedom is provided in terms of designing a configuration for correcting aberration, compared to the case of using cemented lenses as in patent document 2.

Aspheric surfaces are effective for correcting aberration. It is preferable to use aspheric surfaces for the second, fourth, and sixth lenses. In the practical example, both surfaces of these lenses are aspheric.

The second and sixth lenses are both disposed remote from the diaphragm, where the imaging light beam diameter is minimum. Therefore, the on-axis light beam and the off-axis light beam are separated on the lens surfaces of these lenses. The aspheric shape is appropriate for correcting the aberrations of these light beams, both in an area near the optical axis where the on-axis light beam passes, and in the area near the periphery of the lens where the off-axis light beam passes.

The fourth lens is disposed immediately behind the diaphragm. At this position, the on-axis light beam and the off-axis light beam are combined. Thus, if the lens surface had a simple spherical shape, it would be difficult to properly correct the aberration at this portion. However, by using the fourth lens that has aspheric surfaces, the aberration can be effectively corrected (particularly for correcting spherical surface aberration).

The above effects can be achieved with the second, fourth, and sixth lenses having aspheric surfaces. However, lenses other than the second, fourth, and sixth lenses may have aspheric surfaces as well. For example, the second, fourth, and sixth lenses and one or more of the first, third, and fifth lenses may have aspheric surfaces. Any of the lenses other than the second, fourth, and sixth lenses may have aspheric surfaces.

When the second, fourth, and sixth lenses have aspheric surfaces, the second, fourth, and sixth lenses are preferably resin lenses so that they can be easily formed into aspheric shapes.

The first lens may be made of resin. However, the first lens is closest to the object. Thus, if the first lens is exposed outside, the resin lens may break easily by contacting external objects. For this reason, if the first lens is made of resin, a protecting means such as a cover needs to be provided on the first lens for protection.

Considering that the wide angle lens has a field angle that exceeds 180 degrees, the above-mentioned protecting means needs to be devised elaborately, which may increase the overall cost of the wide angle lens.

By using a hard glass lens as the first lens, the above problem, which is caused by exposing the first lens outside, can be effectively prevented. The third and fifth lenses may be made of resin.

The first lens also has a function of effectively refracting the off-axis light beam having a large incidence angle, so that the off-axis light beam approaches the optical axis. For this reason also, the first lens is preferably a glass lens having a high refractive index.

A wide angle lens according to an embodiment of the present invention has higher brightness than that of the conventional technology, and is capable of successfully correcting chromatic aberration, distortion aberration, and other kinds of aberrations. The wide angle lens described in the practical example has a field angle of 190 degrees, an F-number of 2.0, and is capable of successfully correcting various kinds of aberrations such as chromatic aberration.

## Claims

1. A wide angle lens whose field angle exceeds 180 degrees and whose F-number is less than 2.8, comprising:

   a front group, a diaphragm (S), and a rear group, which are arranged in the stated order from an object side toward an image side, wherein
   the front group consists of a first lens (L1) that is a negative meniscus lens whose convex surface is facing the object side, a second lens (L2) that is a negative lens, and a third lens (L3) that is a positive lens, which are arranged in the stated order from the object side toward the image side,
   the rear group consists of a fourth lens (L4) that is a positive lens, a fifth lens (L5) that is a negative lens, and a sixth lens (L6) that is a positive lens, which are arranged in the stated order from a diaphragm side toward the image side,
   the third lens (L3) in the front group is made of a material having an Abbe number of vdL3 that satisfies a condition of vdL3<21, and
   the fifth lens (L5) in the rear group is made of a material having an Abbe number of vdL5 that satisfies a condition of vdL5<21,
   **characterised in that**
   the first to sixth lenses form an imaging system including a total of six separate lenses,
   the second lens (L2) is a negative meniscus lens whose convex surface is facing the object,

the third lens (L3) is a double-convex lens,
the fourth lens (L4) is a double-convex lens, in which the surface having the larger curvature is facing the image,
the fifth lens (L5) is a double-concave lens,
the sixth lens (L6) is a double-convex lens,
both surfaces of the second lens (L2), both surfaces of the fourth lens (L4), and both surfaces of the sixth lens (L6) are aspheric, and
the first lens (L1) is a glass lens; and the second lens (L2), the fourth lens (L4), and the sixth lens (L6) are resin lenses.

2. The wide angle lens according to claim 1, wherein
the wide angle lens has an F-number within a range of 1.9 through 2.4..

3. An imaging device comprising: the wide angle lens according to any one of claims 1 through 2; and
an imaging element (3A) including pixels that are arranged two-dimensionally, the imaging element being configured to perform a conversion process to convert an image of an imaging target formed by the wide angle lens into image data.

4. The imaging device according to claim 3, further comprising:
an electronic processing unit (3F) configured to execute an electronic process on the image data obtained by the conversion process performed by the imaging element.


**Patentansprüche**

1. Weitwinkellinse, deren Feldwinkel 180 Grad überschreitet, deren Blendenzahl kleiner als 2,8 ist und die Folgendes umfasst:

eine vordere Gruppe, eine Membran (S) und eine hintere Gruppe, die in der angegebenen Reihenfolge von einer Objektseite zu einer Bildseite angeordnet sind, wobei
die vordere Gruppe aus einer ersten Linse (L1), die eine Meniskuszerstreuungslinse ist, deren konvexe Oberfläche der Objektseite zugewandt ist, einer zweiten Linse (L2), die eine Zerstreuungslinse ist, und einer dritten Linse (L3), die eine Sammellinse ist, besteht, die in der angegebenen Reihenfolge von der Objektseite zur Bildseite angeordnet sind,
die hintere Gruppe aus einer vierten Linse (L4), die eine Sammellinse ist, einer fünften Linse (L5), die eine Zerstreuungslinse ist, und einer sechsten Linse (L6), die eine Sammellinse ist, besteht, die in der angegebenen Reihenfolge von einer Membranseite zur Bildseite angeordnet sind,
die dritte Linse (L3) in der vorderen Gruppe aus einem Material hergestellt ist, das eine Abbe-Zahl von vdL3 besitzt, die die Bedingung vdL3 < 21 erfüllt, und
die fünfte Linse (L5) in der hinteren Gruppe aus einem Material hergestellt ist, das eine Abbe-Zahl von vdL5 besitzt, die die Bedingung vdL5 < 21 erfüllt,
**dadurch gekennzeichnet, dass**
die erste bis sechste Linse ein Bildgebungssystem bilden, das insgesamt sechs getrennte Linsen enthält,
die zweite Linse (L2) eine Meniskuszerstreuungslinse ist, deren konvexe Oberfläche dem Objekt zugewandt ist,
die dritte Linse (L3) eine bikonvexe Linse ist,
die vierte Linse (L4) eine bikonvexe Linse ist, in der die Oberfläche, die die größere Krümmung besitzt, dem Bild zugewandt ist,
die fünfte Linse (L5) eine bikonkave Linse ist,
die sechste Linse (L6) eine bikonvexe Linse ist,
beide Oberflächen der zweiten Linse (L2), beide Oberflächen der vierten Linse (L4) und beide Oberflächen der sechsten Linse (L6) asphärisch sind und
die erste Linse (L1) eine Glaslinse ist und die zweite Linse (L2), die vierte Linse (L4) und die sechste Linse (L6) Harzlinsen sind.

2. Weitwinkellinse nach Anspruch 1, wobei
die Weitwinkellinse eine Blendenzahl in einem Bereich von 1,9 bis 2,4 besitzt.

3. Bilderzeugungseinrichtung, die Folgendes umfasst: die Weitwinkellinse nach einem der Ansprüche 1 bis 2 und
ein Bildgebungselement (3A), das Pixel enthält, die zweidimensional angeordnet sind, wobei das Bildgebungselement konfiguriert ist, einen Umsetzungsvorgang durchzuführen, um ein Bild eines Bildgebungsziels, das durch die Weitwinkellinse gebildet wird, in Bilddaten umzusetzen.

**4.** Bilderzeugungseinrichtung nach Anspruch 3, die ferner Folgendes umfasst:
eine elektronische Verarbeitungseinheit (3F), die konfiguriert ist, einen elektronischen Vorgang an den Bilddaten, die durch den Umsetzungsvorgang, der durch das Bildgebungselement durchgeführt wird, erhalten wurden, auszuführen.

**Revendications**

**1.** Objectif à grand angle dont l'angle de champ dépasse 180 degrés et dont le nombre F est inférieur à 2,8, comprenant :

un groupe avant, un diaphragme (S), et un groupe arrière, qui sont agencés dans l'ordre indiqué depuis un côté objet vers un côté image, dans lequel
le groupe avant est constitué d'une première lentille (L1) qui est une lentille ménisque négative dont la surface convexe fait face au côté objet, d'une deuxième lentille (L2) qui est une lentille négative, et d'une troisième lentille (L3) qui est une lentille positive, qui sont agencées dans l'ordre indiqué depuis le côté objet vers le côté image,
le groupe arrière est constitué d'une quatrième lentille (L4) qui est une lentille positive, d'une cinquième lentille (L5) qui est une lentille négative, et d'une sixième lentille (L6) qui est une lentille positive, qui sont agencées dans l'ordre indiqué depuis un côté diaphragme vers le côté image,
la troisième lentille (L3) dans le groupe avant est faite d'un matériau ayant un nombre d'Abbe de vdL3 qui satisfait à une condition de vdL3<21, et
la cinquième lentille (L5) dans le groupe arrière est faite d'un matériau ayant un nombre d'Abbe de vdL5 qui satisfait à une condition de vdL5<21,
**caractérisé en ce que**
les première à sixième lentilles forment un système d'imagerie incluant un total de six lentilles séparées,
la deuxième lentille (L2) est une lentille ménisque négative dont la surface convexe fait face à l'objet,
la troisième lentille (L3) est une lentille biconvexe,
la quatrième lentille (L4) est une lentille biconvexe, dans laquelle la surface ayant la courbure la plus grande fait face à l'image,
la cinquième lentille (L5) est une lentille biconcave,
la sixième lentille (L6) est une lentille biconvexe,
les deux surfaces de la deuxième lentille (L2), les deux surfaces de la quatrième lentille (L4), et les deux surfaces de la sixième lentille (L6) sont asphériques, et
la première lentille (L1) est une lentille en verre ; et la deuxième lentille (L2), la quatrième lentille (L4), et la sixième lentille (L6) sont des lentilles en résine.

**2.** Objectif à grand angle selon la revendication 1, dans lequel
l'objectif à grand angle a un nombre F au sein d'une plage de 1,9 à 2,4..

**3.** Dispositif d'imagerie, comprenant : l'objectif à grand angle selon l'une quelconque des revendications 1 à 2 ; et un élément d'imagerie (3A) incluant des pixels qui sont agencés bidimensionnellement, l'élément d'imagerie étant configuré pour réaliser un traitement de conversion pour convertir une image d'une cible d'imagerie formée par l'objectif à grand angle en données d'image.

**4.** Dispositif d'imagerie selon la revendication 3, comprenant en outre :
une unité de traitement électronique (3F) configurée pour exécuter un traitement électronique sur les données d'image obtenues par le traitement de conversion réalisé par l'élément d'imagerie.

FIG.1

FOCAL LENGTH 0.876 mm
F-NUMBER F2.0

## FIG.2

| | CURVATURE RADIUS | INTER-SURFACE INTERVAL | REFRACTIVE INDEX | ABBE NUMBER | ASPHERIC SURFACE |
|---|---|---|---|---|---|
| 1 | 13.263 | 0.700 | 1.83481 | 42.7 | |
| 2 | 4.583 | 2.060 | | | |
| 3 | 8.074 | 0.800 | 1.53046 | 55.8 | ○ |
| 4 | 1.040 | 2.510 | | | ○ |
| 5 | 5.500 | 1.150 | 1.92286 | 18.9 | |
| 6 | −12.268 | 0.880 | | | |
| 7 (DIAPHRAGM) | | 0.100 | | | |
| 8 | 3.859 | 1.260 | 1.53046 | 55.8 | ○ |
| 9 | −0.813 | 0.100 | | | ○ |
| 10 | −2.476 | 0.800 | 1.92286 | 18.9 | |
| 11 | 5.431 | 0.110 | | | |
| 12 | 1727.832 | 1.130 | 1.53046 | 55.8 | ○ |
| 13 | −2.862 | 0.250 | | | ○ |
| 14 (CG) | | 0.550 | 1.51680 | 64.2 | |
| 15 (CG) | | 0.290 | | | |
| 16 (IMAGING SURFACE) | | | | | |

EP 2 414 883 B1

# FIG.3

| | K | A | B | C | D | E | F |
|---|---|---|---|---|---|---|---|
| 3 | 2.672E+00 | −1.540E−03 | −2.174E−04 | 5.107E−06 | 0 | 0 | 0 |
| 4 | −7.274E−01 | 2.605E−02 | 7.112E−03 | −3.322E−03 | −1.163E−03 | 1.229E−04 | 0 |
| 8 | −8.080E+01 | 9.862E−02 | −4.967E−01 | 7.323E−01 | −9.023E−01 | 0 | 0 |
| 9 | −5.966E−01 | 3.363E−01 | −3.535E−01 | 2.949E−01 | −1.396E−01 | 1.885E−06 | −3.604E−07 |
| 12 | −3.642E+06 | 2.768E−01 | −2.372E−01 | 1.105E−01 | −2.343E−02 | 0 | 0 |
| 13 | 0 | 1.633E−02 | 5.773E−02 | −1.937E−02 | 0 | 0 | 0 |

EP 2 414 883 B1

# FIG.4

TANGENTIAL                                    SAGITTAL

R : 650 nm
G : 532 nm
B : 477 nm

# FIG.5

# FIG.6

| DESIGN FOCAL LENGTH | 0.876 |

| FIELD ANGLE | IMAGE HEIGHT | FIELD ANGLE (rad) | IDEAL IMAGE HEIGHT OF CUBIC PROJECTION IN CCDV DIRECTION | DIST (%) |
|---|---|---|---|---|
| 0 | 0.000 | 0 | 0.0000 | 0.00% |
| 10 | 0.153 | 0.174533 | 0.1533 | −0.17% |
| 20 | 0.307 | 0.349066 | 0.3089 | −0.66% |
| 30 | 0.463 | 0.523599 | 0.4694 | −1.37% |
| 40 | 0.625 | 0.698132 | 0.6377 | −2.05% |
| 50 | 0.797 | 0.872665 | 0.8170 | −2.41% |
| 60 | 0.990 | 1.047198 | 1.0115 | −2.14% |
| 70 | 1.212 | 1.22173 | 1.2268 | −1.19% |
| 80 | 1.469 | 1.396263 | 1.4701 | −0.10% |
| 90.5 | 1.760 | 1.579523 | 1.7674 | −0.42% |
| 95 | 1.881 | 1.658063 | 1.9120 | −1.62% |

ANGLE (deg.)

DIST (%)

EP 2 414 883 B1

# FIG.7

| | ES1 | |
|---|---|---|
| FIELD ANGLE | R-G(mm) | B-G(mm) |
| 0 | 0 | 0 |
| 10 | -0.0003 | 0.0004 |
| 20 | -0.0005 | 0.0008 |
| 30 | -0.0007 | 0.0012 |
| 40 | -0.0008 | 0.0015 |
| 50 | -0.0006 | 0.0017 |
| 60 | 0.0002 | 0.0016 |
| 70 | 0.0017 | 0.0011 |
| 80 | 0.0035 | 0.0005 |
| 90.5 | 0.0044 | 0.0008 |
| 95 | 0.0041 | 0.0015 |
| 96.5 | 0.003902 | 0.0018847 |

Legend:
—— R-G (7-1)
-------- B-G (7-2)

EP 2 414 883 B1

# FIG.8

| FIELD ANGLE | ES1 | |
| --- | --- | --- |
| | R-G (PIXEL) | B-G (PIXEL) |
| 0 | 0.00 | 0.00 |
| 10 | −0.04 | 0.07 |
| 20 | −0.08 | 0.14 |
| 30 | −0.11 | 0.20 |
| 40 | −0.13 | 0.26 |
| 50 | −0.09 | 0.29 |
| 60 | 0.03 | 0.27 |
| 70 | 0.28 | 0.18 |
| 80 | 0.59 | 0.08 |
| 90.5 | 0.73 | 0.14 |
| 95 | 0.68 | 0.26 |
| 96.5 | 0.65 | 0.31 |

——— R-G (7-1)

- - - - - B-G (7-2)

EP 2 414 883 B1

# FIG.9

| FIELD ANGLE | ES1 | |
| --- | --- | --- |
| | R−G (PIXEL) | B−G (PIXEL) |
| 0 | 0.00 | 0.00 |
| 10 | −0.08 | 0.14 |
| 20 | −0.16 | 0.27 |
| 30 | −0.23 | 0.40 |
| 40 | −0.25 | 0.52 |
| 50 | −0.18 | 0.57 |
| 60 | 0.07 | 0.53 |
| 70 | 0.56 | 0.36 |
| 80 | 1.18 | 0.16 |
| 90.5 | 1.47 | 0.27 |
| 95 | 1.37 | 0.51 |
| 96.5 | 1.30 | 0.63 |

R−G (7−1)

B−G (7−2)

EP 2 414 883 B1

# FIG.10

# FIG.11

IMAGING LENS SYSTEM → CCD (3A) → F/E [3F: AGC (3F1) → A/D (3F2)] → SIGNAL PROCESSING UNIT (3I) → VIDEO ENCODER (3K) → DISPLAY (3L)

FRAME MEMORY (3J)

OPERATIONS UNIT (3G) → CONTROL CIRCUIT (3H)

EP 2 414 883 B1

# FIG.12

```
                                    ⌒3I
                          SIGNAL
                          PROCESSING UNIT   ⌒3I1              ⌒3I2
                                       ┌─────────────┐    ┌─────────┐
  ┌─────────┐                          │  PRIMARY    │    │         │    ┌─────────┐
  │  INPUT  │ ─────────────────▶       │ CONVERSION  │ ──▶│   FIR   │ ──▶│ OUTPUT  │
  └─────────┘                          │  CIRCUIT    │    │         │    └─────────┘
                                       └─────────────┘    └─────────┘
```

**EP 2 414 883 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007249073 A
- JP 2006284620 A
- JP 2008276185 A
- JP 2007279632 A
- US 2009073577 A1